# FASCICULE DE BREVET EUROPEEN

(11) **EP 4 448 264 B1**
(45) Date de publication et mention de la délivrance du brevet: **03.12.2025**
(21) Numéro de dépôt: 22839753.5
(22) Date de dépôt: 16.12.2022
(51) Int. Cl.: B29D 99/00, B29D 24/00, B29B 15/12, B29C 70/38, B29C 70/86

(54) **INSTALLATION DE FABRICATION DE PANNEAUX COMPORTANT DES MATÉRIAUX COMPOSITES BIOSOURCÉS ET RECYCLÉS**
VORRICHTUNG ZUR HERSTELLUNG VON PLATTEN MIT BIOBASIERTEN UND RECYCELTEN VERBUNDSTOFFMATERIALIEN
APPARATUS FOR MANUFACTURING PANELS COMPRISING BIOBASED AND RECYCLED COMPOSITE MATERIALS

(30) Priorité: 17.12.2021 FR 2113875
(43) Date de publication de la demande: 23.10.2024
(73) Titulaire: Unit Product SAS, 81120 Réalmont (FR)
(72) Inventeur: HARDY, David, 31530 Merenvielle (FR)
(74) Mandataire: Gevers & Orès
(86) Numéro de dépôt international: PCT/EP2022/086442
(87) Numéro de publication internationale: WO 2023/111305

(56) Documents cités:
- DE-A1- 102004 041 454
- IT-A1- PC20 100 005
- US-A1- 2020 223 161

## Description

### Domaine technique de l'invention

L'invention concerne une installation de fabrication de panneaux comportant une âme prise en sandwich entre deux plis de matériau composite, chaque pli de matériau composite comportant une armature en étoffe imprégnée d'une matrice.

### Arrière-plan technique

L'état de la technique comprend notamment les documents ITPC20100005A1, US2020/223161A1 et DE102004041454A1.

Les différents éléments des panneaux composites à structure en sandwich sont généralement fabriqués séparément, puis ils sont empilés et liés ensemble lors d'une dernière étape d'assemblage.

Ainsi, les plis extérieurs sont fabriqués séparément par imprégnation d'une armature en étoffe avec une matrice. Le pli présente alors un état dit "humide". Chaque pli est ensuite chauffé pour polymériser la matrice. Après chauffage, le pli présente alors un état dit "sec". Ensuite les plis sont collés de part et d'autre de l'âme.

La fabrication d'un panneau requiert donc de nombreuses opérations réalisées sur des machines différentes. Ainsi, une ligne de fabrication de panneaux selon ce procédé connu est très encombrante et onéreuse.

En outre, la fabrication de panneaux selon ce procédé demande du temps.

L'invention propose donc une installation pour permettre de fabriquer de tels panneaux de manière rapide et peu onéreuse. L'invention propose en outre une installation peu encombrante.

### Résumé de l'invention

L'invention propose ainsi une installation de fabrication de panneaux comportant les caractéristiques de la revendication 1.

Selon une autre caractéristique de l'invention, le dispositif d'imprégnation et les moyens de guidage sont montés mobiles conjointement selon la direction verticale.

Selon une autre caractéristique de l'invention, le dispositif d'imprégnation et les moyens de guidage sont montés sur une même structure porteuse qui est montée coulissante verticalement sur le chariot.

Selon une autre caractéristique de l'invention, le coulissement vertical du dispositif d'imprégnation et des moyens de guidage est réalisé au moyen d'un actionneur motorisé.

Selon une autre caractéristique de l'invention, l'installation comporte un rouleau réalisé par enroulement d'armature, le rouleau étant monté à rotation autour d'un premier axe transversal de rotation pour permettre le déroulement de l'armature selon une direction de déroulement longitudinale et le passage de l'armature à travers les moyens de guidage et le dispositif d'imprégnation.

Selon une autre caractéristique de l'invention, le rouleau d'armature est monté à rotation sur la structure porteuse.

Selon une autre caractéristique de l'invention, le dispositif d'imprégnation comporte un dispositif de compactage qui comprime l'armature et la matrice après déposition de la matrice et avant son dépôt sur la table.

### Brève description des figures

D'autres caractéristiques et avantages de l'invention apparaitront au cours de la lecture de la description détaillée qui va suivre pour la compréhension de laquelle on se reportera aux dessins annexés décrits par la suite.
La [Fig.1] est une vue en perspective qui représente une portion d'un panneau réalisé au moyen d'une installation conforme aux enseignements de l'invention.
La [Fig.2] est une vue en perspective qui représente l'installation de fabrication d'un panneau dans son ensemble réalisée selon un premier mode de réalisation ne faisant pas partie de l'invention.
La [Fig.3] est une vue de détail en perspective avec coupe sagittale à plus grande échelle qui représente un chariot de l'installation de fabrication de la [Fig.2] dans lequel un dispositif d'imprégnation est réalisé selon le premier mode de réalisation.
La [Fig.4] est une vue similaire à celle de la [Fig.3] qui représente le dispositif d'imprégnation réalisé selon un deuxième mode de réalisation faisant partie de l'invention.
La [Fig.5] est une vue en coupe sagittale qui représente le dispositif d'imprégnation réalisé selon un troisième mode de réalisation ne faisant pas partie de l'invention.
La [Fig.6] est une vue schématique de côté qui représente une structure porteuse du chariot dans une position basse lors de la déposition d'une première armature directement sur la table.
La [Fig.7] est une schématique de côté qui représente la même structure porteuse que la [Fig.6] qui occupe une position supérieure de manière à déposer une armature sur un empilement de panneaux posés sur la table.

### Description détaillée de l'invention

Dans la suite de la description, des éléments présentant une structure identique ou des fonctions analogues seront désignés par une même référence.

Dans la suite de la description, on adoptera à titre non limitatif une orientation longitudinale, dirigée d'arrière en avant, une orientation transversale, dirigée de gauche à droite, et une orientation verticale, dirigée de bas en haut, indiquées par le trièdre "L,V,T" des figures.

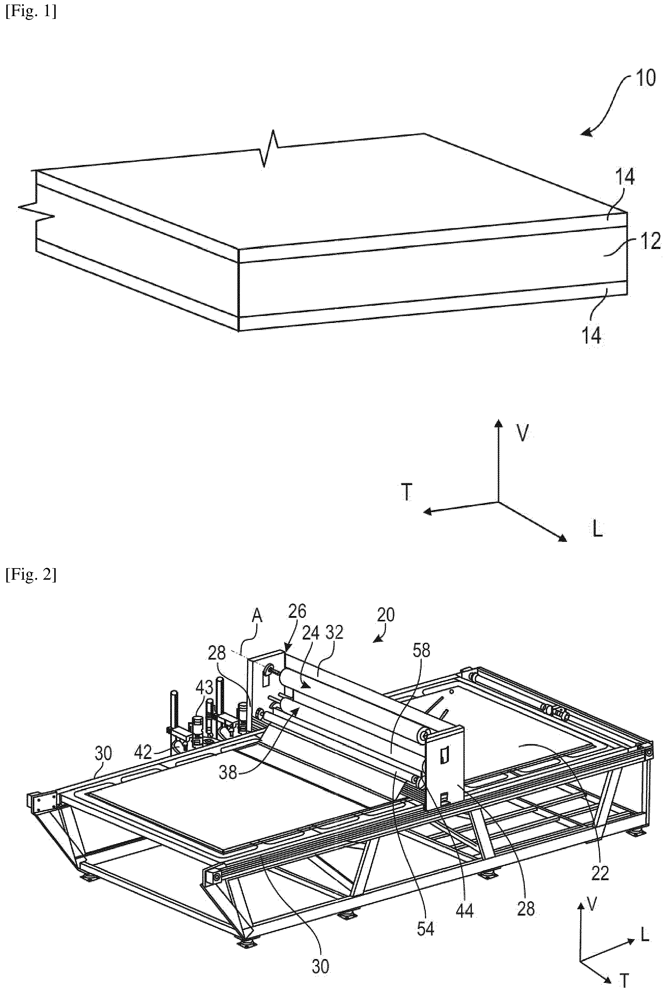

On a représenté à la [Fig.1] un panneau 10 composite comportant une âme 12 prise en sandwich entre deux plis 14 de matériau composite. Le panneau 10 est ici représenté dans une position horizontale. Chaque pli 14 est réalisé en un même matériau composite. Le panneau 10 présente généralement une forme rectangulaire.

Il s'agit ici de panneaux 10 de très grandes dimensions présentant par exemple une largeur d'au moins 1,50 m, voire plus de 2 m, par exemple 2,4 m. La longueur du panneau 10 est bien entendu supérieure à sa largeur. La longueur est par exemple de 5 m. L'épaisseur du panneau 10 est par exemple comprise entre 10 et 40 mm

Il s'agit par exemple d'un panneau 10 qui peut être utilisé pour l'aménagement intérieur de bateaux, d'avions, de camions, de trains, etc. Pour ces utilisations, il est préférable qu'un tel panneau 10 présente des propriétés de retardant au feu, permettant de freiner la propagation des incendies et de réduire les fumées et leur toxicité.

L'âme 12 est par exemple une plaque de structure pleine réalisée en mousse thermoplastique, tel que du polyéthylène téréphtalate recyclé (PET recyclé). Elle peut aussi se présenter sous la forme d'une structure en nid d'abeille réalisée par exemple en aramide ou en matériau thermoplastique.

Chaque pli 14 comporte une armature 16 imprégnée d'une matrice 18. L'armature 16 est formée d'une unique pièce d'étoffe. L'étoffe est par exemple réalisée en fibres de basalte. L'étoffe peut être tissée ou non-tissée.

La matrice 18 se présente sous la forme d'un liquide visqueux. La matrice 18 comporte par exemple une résine polymérisable par chauffage, aussi dite "thermodurcissable", telle que de l'époxyde.

En variante, la matrice est une résine polymérisable à température ambiante, par exemple aux alentours de 20°C.

La matrice 18 comprend avantageusement des charges non halogénées pour lui conférer des propriétés de retardant au feu permettant de freiner la propagation des incendies.

Ces matériaux présentent l'avantage d'être facilement recyclables. Il s'agit avantageusement de matériaux biosourcés et recyclés.

On a représenté à la [Fig.2] une installation 20 de fabrication d'un tel panneau qui a été réalisée selon les enseignements de l'invention.

Cette installation 20 est destinée à réaliser des panneaux 10 par superposition d'un premier pli 14, puis d'une âme 12 centrale, puis d'un deuxième pli 14 identique au premier.

L'installation 20 comporte une table 22 de réception du panneau 10 qui s'étend dans un plan longitudinal transversal. La table est ici posée de manière fixe sur le sol. La direction longitudinale correspond ici au sens de la longueur du panneau 10, tandis que la direction transversale correspond à sa largeur.

L'installation 20 comporte en outre des moyens d'imprégnation de chaque armature 16. Ces moyens de fabrication comportent un rouleau 24 formé par enroulement d'une bande continue d'armature 16 présentant une longueur suffisante pour former au moins un pli 14. Le rouleau 24 comporte ici une longueur d'armature 16 suffisante pour former plusieurs plis 14.. Le rouleau 24 présente une largeur au moins égale à celle du panneau 10. Le rouleau 24 est monté à rotation selon un premier axe "A" transversal de rotation pour permettre son déroulement selon une direction de déroulement longitudinale.

Les moyens de fabrication comportent aussi un chariot 26 mobile selon la direction de déroulement. A cet effet, le chariot 26 comporte ici deux pieds 28 latéraux qui sont guidés en déplacement longitudinal par deux rails 30 longitudinaux disposés de part et d'autre de la table 22. Le chariot 26 comporte une structure 32 porteuse qui s'étend transversalement d'un pied 28 à l'autre au-dessus de la table 22. Ainsi, le chariot 26 présente la forme générale d'un pont roulant.

La structure 32 porteuse comporte des moyens de guidage de l'armature 16. L'armature 16 passe ainsi à travers les moyens de guidage à mesure de l'avancement du chariot 26.

A cet effet, une extrémité libre de l'armature 16 est par exemple attachée à une extrémité arrière de la table 22. En variante non représentée, les moyens de guidage comportent au moins un rouleau moteur qui permet aux moyens de guidage de tirer sur l'armature 16 à mesure de l'avancement du chariot 26 pour permettre le dépôt de l'armature 16 sur la table 22.

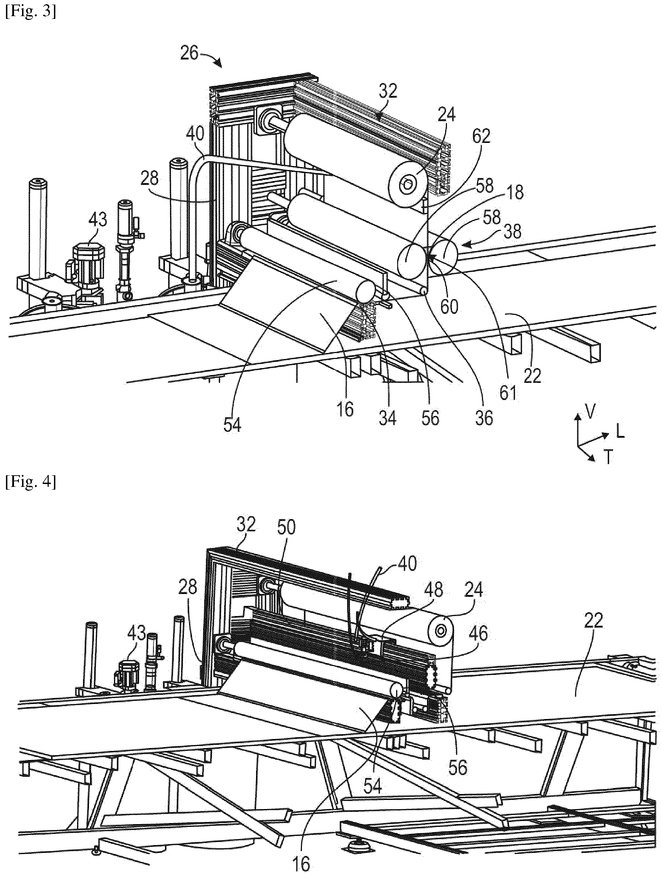

Comme représenté plus en détails à la [Fig.3], les moyens de guidage sont équipés d'au moins une face 34 transversale de distribution orientée vers le haut qui est agencée à proximité de la surface sur laquelle l'armature 16 doit être étendue. L'armature 16 descend ainsi directement depuis la face 34 de distribution jusque sur la surface sur laquelle l'armature 16 est étendue. La face 34 de distribution est ici formée par un rebord d'une poutre transversale de la structure 32 porteuse.

En variante non représentée, la face de guidage est formée par la face cylindrique d'un rouleau tournant autour d'un axe transversal.

Les moyens de guidage peuvent aussi comporter un ou plusieurs rouleaux 36 de renvoi d'angle d'axe transversal pour orienter l'armature 16 lors de son passage dans la structure 32 porteuse.

Ces moyens de guidage permettent d'étendre progressivement l'armature 16 à plat sur la table 22 en déroulant le rouleau 24 à mesure du déplacement du chariot 26 vers une extrémité avant de la table 22.

Les moyens de fabrication comportent aussi un dispositif 38 d'imprégnation de l'armature 16 avec la matrice 18. Le dispositif 38 d'imprégnation est porté par le chariot 26. Il est alimenté avec la matrice 18 à l'état liquide par exemple au moyen de tuyaux 40 raccordés à au moins un réservoir 42 posé sur le sol, ici à côté de la table 22. Les tuyaux 40 sont suffisamment longs et souples pour accompagner les déplacements du dispositif 38 d'imprégnation. Un dispositif 43 de pompage par dosage (représenté sur les figures 2,3 4 et 5) est prévu pour calibrer et acheminer la matrice 18 jusqu'au dispositif 38 d'imprégnation.

Le dispositif 38 d'imprégnation est traversé par l'armature 16 pendant son trajet depuis le rouleau 24 jusqu'à la table 22. Ainsi l'armature 16 est imprégnée, calibrée et compactée progressivement lors de son passage à travers le dispositif 38 d'imprégnation et avant d'être étendue sur la table 22.

L'installation 20 comporte enfin un couteau qui permet de couper l'armature 16 dans le sens de la largeur lorsque la longueur désirée a été étendue sur la table 22 pour former un pli 14.

L'installation 20 comporte en outre un dispositif de manutention à ventouses (non représenté) qui permet de déposer automatiquement l'âme 12, préalablement coupée aux bonnes dimensions, sur l'armature 16 ainsi étendue sur la table 22.

Le panneau 10 ainsi assemblé est recouvert d'une coiffe souple (non représentée) pour compacter cet assemblage à l'état humide par une mise sous vide et le tout ensuite convoyé jusqu'à une station de chauffage (non représentée), telle qu'une étuve, par des dispositifs de manutention tels qu'un convoyeur mais aussi chariot élévateur. La station de chauffage permet de polymériser la matrice 18 sur cet assemblage à une température suffisante. Ceci permet de solidifier les plis 14 et d'assurer leur adhérence à l'âme 12.

L'installation 20 est avantageusement conçue pour pouvoir réaliser sans interruption de la production un panneau 10 épais, voire plusieurs panneaux 10 horizontaux superposés verticalement, par exemple six panneaux 10 superposés. Ceci permet de produire rapidement un lot de plusieurs panneaux 10 qui sont ensuite transportés en une seule opération de convoyage jusqu'à la station de chauffage. Il est ainsi possible de réduire le temps nécessaire à la fabrication de chaque panneau 10.

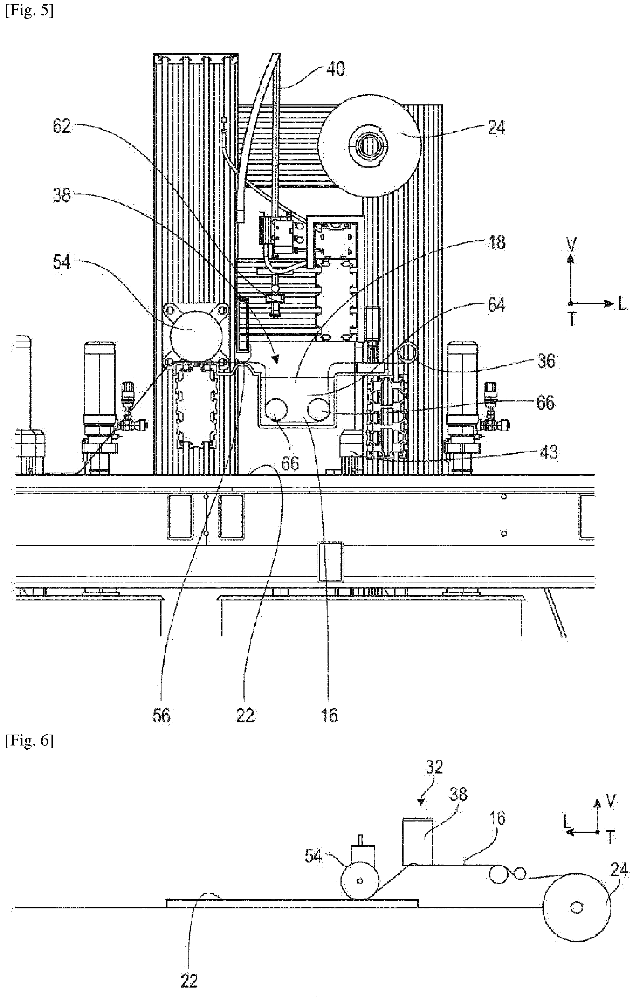

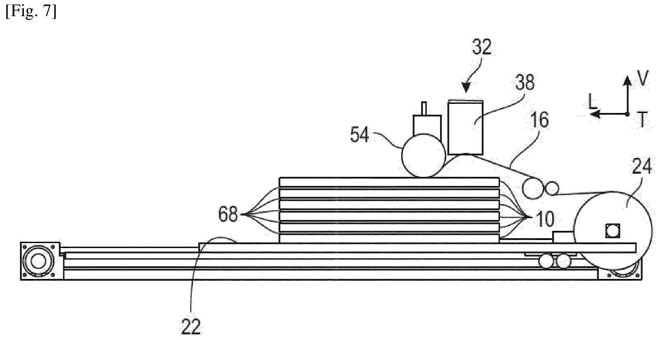

Un tel procédé de production d'un lot de panneaux 10 est ici illustré aux figures 6 et 7. Ce procédé est applicable à tous les modes de réalisation décrits précédemment.

A cet effet, le dispositif 38 d'imprégnation et les moyens de guidage sont montés mobiles verticalement sur le chariot 26.

Plus particulièrement, le dispositif 38 d'imprégnation et les moyens de guidage sont ici montés mobiles conjointement selon la direction verticale. Ainsi un seul actionneur 44 motorisé est prévu pour déplacer simultanément le dispositif 38 d'imprégnation et les moyens de guidage. La structure 32 porteuse est ici montée coulissante verticalement dans son ensemble sur les pieds 28 du chariot 26. La structure 32 porteuse comporte par exemple des montants d'extrémité qui sont montés télescopiques sur les pieds 28 du chariot 26.

Dans les exemples représentés aux figures 2 à 5, le rouleau 24 est monté à rotation sur le chariot 26, et plus particulièrement sur la structure 32 porteuse, ainsi le rouleau 24 se déplace conjointement avec le chariot 26 en coulissement longitudinal. Ainsi, le rouleau 24 se déplace conjointement avec le dispositif 38 d'imprégnation en coulissement vertical.

En variante représentée aux figures 6 et 7, le rouleau 24 est monté à rotation autour d'un axe fixe par rapport à la table 22, par exemple à une extrémité arrière de la table 22.

Selon un premier mode de réalisation du dispositif 38 d'imprégnation représenté aux figures 2 et 3, il comporte deux cylindres 58 agencés en contact l'un avec l'autre au niveau d'un interstice réglable 60, à la manière d'un dispositif de calandrage. L'armature 16 est passée dans l'interstice 60 entre les deux cylindres 58 de manière à faire migrer la matrice 18 dans l'épaisseur de l'armature 16 par compactage lors de son passage.

Les deux cylindres 58 sont agencés de manière que l'armature 16 passe verticalement du haut vers le bas dans l'interstice 60. Un volume 61 ouvert vers le haut et délimité vers le bas par l'interstice 60 et les deux cylindres 58. Un déversoir 62 étant agencé pour déverser de la matrice 18 dans le volume 61 l'interstice entre les deux cylindres 58 en amont selon le sens de déplacement de l'armature 16 entre les cylindres 58. Ainsi, l'armature 16 est trempée dans la matrice 18 sur toute sa largeur avant de passer à travers les cylindres 58 qui permettent d'assurer l'imprégnation de la matrice 18.

Selon un deuxième mode de réalisation du dispositif 38 d'imprégnation représenté à la [Fig.4], il comporte une buse 46 de déposition de la matrice 18 sur une zone de l'armature 16 qui est moins large que la largeur transversale de l'armature 16. La matrice 18 est par exemple projetée sous pression par la buse 46. Pour permettre d'imprégner l'armature 16 sur toute sa largeur, le dispositif 38 d'imprégnation comporte donc une navette 48 embarquant la buse 46. La navette 48 est guidée en déplacement transversal par un organe 50 de guidage transversal, tel qu'un rail. La navette 48 est équipée d'un actionneur 52 permettant son déplacement dans les deux sens. La buse 46 effectue ainsi une succession d'allers et retours selon la direction transversale par rapport au chariot 26 pour permettre de déposer la matrice 18 sur toute la largeur de l'armature 16 et l'étendre sur la longueur par le dispositif 54 de compactage.

Selon un troisième mode de réalisation du dispositif 38 d'imprégnation, il comporte un bac 64 rempli de matrice 18 et dans lequel l'armature 16 passe pour être trempée sur toute sa largeur lors de son passage à travers le dispositif 38 d'imprégnation. Pour ce faire, il est prévu des rouleaux 66 de guidage de l'armature 16 à l'intérieur du bac 64.

Quel que soit le mode de réalisation du dispositif 38 d'imprégnation, pour permettre de faire pénétrer la matrice 18 en profondeur dans l'étoffe destinée à former l'armature 16 et pour permettre sa répartition homogène, le dispositif 38 d'imprégnation comporte un dispositif 54 de compactage qui comprime l'armature 16 après déposition de la matrice 18 et avant son dépôt sur la table 22. Il s'agit par exemple d'un cylindre. Le cylindre présente par exemple une face cylindrique réalisée en un matériau déformable élastiquement selon une direction radiale, par exemple réalisé en matériau élastomère, pour garantir une bonne compression de l'armature sans risquer de l'endommager.

Le dispositif 54 de compactage est ici précédé d'un régulateur 56 qui est agencé juste au-dessus du passage de l'armature 16 après déposition de la matrice 18. Le régulateur 56 présente la forme d'un racloir qui permet de répartir et d'étaler la matrice 18 de manière homogène sur la surface supérieure de l'armature 16.

Le dispositif 54 de compactage et le régulateur 56 sont embarqués sur la structure 32 porteuse de manière à coulisser conjointement avec le dispositif 38 d'imprégnation et avec les moyens de guidage selon la direction verticale.

Lors de la fabrication d'un lot de panneaux 10, comme représenté par exemple à la [Fig.6], un premier pli 14 formé d'une armature 16 imprégnée de matrice 18 est déposé directement sur la table 22 par le chariot 26. Le dispositif 38 d'imprégnation a été représenté de manière schématique car il peut être réalisé selon l'un quelconque des trois modes de réalisation décrits précédemment. La structure 32 porteuse est alors dans une position basse de manière que les moyens de guidage soient proches de la surface supérieure de la table 22. Le chariot 26 démarre à une extrémité arrière de la table 22 et il est déplacé jusqu'à une extrémité avant de la table en déposant l'armature 16.

Puis l'âme 12 est déposée sur ce premier pli 14 pendant que le chariot 26 occupe l'extrémité avant de la table 22.

Après le dépôt de l'âme 12, la structure 32 porteuse est déplacée verticalement vers le haut de manière à être au-dessus de l'âme 12, puis le chariot 26 est coulissé longitudinalement jusqu'à l'extrémité arrière de la table. Puis un deuxième pli 14 est déposé directement sur la face supérieure de l'âme 12 par le chariot 26. On a représenté à la [Fig.7] la structure 32 porteuse dans une position supérieure à celle qu'elle occupe à la [Fig.6].

La matrice 18 demeure encore dans son état non polymérisé.

Suite à la fabrication de ce premier panneau 10, un deuxième panneau 10 est fabriqué alors que le premier panneau 10 est toujours sur la table 22.

Un contre-moule, aussi appelé intercalaire 68, formé par exemple d'une feuille en aluminium peut être déposé sur le deuxième pli 14 du premier panneau 10 avant le début de la fabrication du deuxième panneau 10. Cela permettra de séparer plus facilement les panneaux 10 les uns des autres après la polymérisation de la matrice 18. A cet effet, l'intercalaire 68 présente les mêmes dimensions que le panneau 10.

Le deuxième panneau 10 est fabriqué de la même manière que le premier panneau 10 si ce n'est que le premier pli 14 est déposé sur la table 22 avec interposition du premier panneau 10 et, le cas échéant, de l'intercalaire 68. La structure 32 porteuse est coulissée vers le haut à mesure que les couches superposées de matériau font monter la surface sur laquelle l'armature 16 doit être déposée.

Il est ainsi possible réaliser un empilement de plusieurs panneaux 10, l'empilement présentant par exemple une hauteur de 500 mm.

Cet empilement de panneaux 10 à l'état humide est ensuite recouvert d'une coiffe souple (non représentée) pour compacter cet empilement par une mise sous vide. Le tout est ensuite convoyé jusqu'à une station de chauffage (non représentée), telle qu'une étuve, par des dispositifs de manutention tels qu'un convoyeur mais aussi chariot élévateur. La station de chauffage permet de polymériser la matrice 18 simultanément sur tous les panneaux 10 de cet empilement. Ceci permet de solidifier les plis 14 et d'assurer leur adhérence à l'âme 12.

En variante non représentée de l'invention, l'installation 20 peut être utilisée pour fabriquer des panneaux stratifiés réalisés par superposition de plusieurs plis 14 sans interposition d'une âme 12.

## Revendications

1. Installation (20) de fabrication de panneaux (10) comportant une âme (12) prise en sandwich entre deux plis (14) de matériau composite, chaque pli (14) de matériau composite comportant une armature (16) en étoffe imprégnée d'une matrice (18), l'installation (20) comportant :
- une table (22) de réception du panneau (10) qui s'étend dans un plan longitudinal transversal ;
- un chariot (26) mobile selon la direction longitudinale qui comporte des moyens de guidage à travers lesquels l'armature (16) passe afin d'étendre progressivement l'armature (16) à plat sur la table (22) à mesure du déplacement du chariot (26) ;
- un dispositif (38) d'imprégnation de l'armature (16) avec la matrice (18) qui est alimenté avec la matrice (18) à l'état liquide et qui est porté par le chariot (26), l'armature (26) étant imprégnée progressivement lors de son passage à travers le dispositif (38) d'imprégnation avant son dépôt sur la table (22) ;
- le dispositif (38) d'imprégnation et les moyens de guidage sont montés mobiles verticalement sur le chariot (26) ;
**caractérisée en ce que** le dispositif (38) d'imprégnation comporte une buse (46) de déposition de la matrice (18) sur une zone de l'armature (16) qui est moins large que la largeur transversale de l'armature (16), le dispositif (38) d'imprégnation comportant une navette (48) embarquant la buse (46) et un organe (50) de guidage transversal qui permet le déplacement de la buse (46) selon la direction transversale par rapport au chariot (26).

2. Installation (20) selon la revendication précédente, **caractérisée en ce que** le dispositif (38) d'imprégnation et les moyens de guidage sont montés mobiles conjointement selon la direction verticale.

3. Installation (20) selon la revendication précédente, **caractérisée en ce que** le dispositif (38) d'imprégnation et les moyens de guidage sont montés sur une même structure (32) porteuse qui est montée coulissante verticalement sur le chariot (26).

4. Installation (20) selon l'une quelconque des revendications précédentes, **caractérisée en ce que** le coulissement vertical du dispositif (38) d'imprégnation et des moyens de guidage est réalisé au moyen d'un actionneur (44) motorisé.

5. Installation (20) selon l'une quelconque des revendications précédentes, **caractérisée en ce qu'**elle comporte un rouleau (24) réalisé par enroulement d'armature (16), le rouleau (24) étant montée à rotation autour d'un premier axe transversal de rotation pour permettre le déroulement de l'armature (16) selon une direction de déroulement longitudinale et le passage de l'armature (16) à travers les moyens de guidage et le dispositif (38) d'imprégnation.

6. Installation (20) selon la revendication précédente prise en combinaison avec les revendications 3 et 4, **caractérisée en ce que** le rouleau (24) d'armature est monté à rotation sur la structure (32) porteuse.

7. Installation (20) selon l'une quelconque des revendications précédentes, **caractérisé en ce que** le dispositif (38) d'imprégnation comporte un dispositif (54) de compactage qui comprime l'armature (16) et la matrice (18) après déposition de la matrice (18) et avant son dépôt sur la table (22).

## Patentansprüche

1. Einrichtung (20) zur Herstellung von Platten (10), die ein Kernmaterial (12) umfassen, das zwischen zwei Lagen (14) aus Verbundmaterial eingeklemmt ist, wobei jede Lage (14) aus Verbundmaterial eine Verstärkung (16) aus mit einer Matrix (18) imprägniertem Gewebe umfasst, wobei die Einrichtung (20) umfasst:
- einen Tisch (22) zur Aufnahme der Platte (10), der sich in einer quergerichteten Längsebene erstreckt;
- einen gemäß der Längsrichtung beweglichen Schlitten (26), der Mittel zur Führung umfasst, durch die die Verstärkung (16) passiert, um die Verstärkung (16) im Verlauf der Verschiebung des Schlittens (26) progressiv flach auf dem Tisch (22) auszubreiten;
- eine Vorrichtung (38) zur Imprägnierung der Verstärkung (16) mit der Matrix (18), die mit der Matrix (18) im flüssigen Zustand versorgt wird und die von dem Schlitten (26) getragen wird, wobei die Verstärkung (26) bei ihrer Passage durch die Vorrichtung (38) zur Imprägnierung hindurch progressiv imprägniert wird, bevor sie auf dem Tisch (22) abgelegt wird;
- wobei die Vorrichtung (38) zur Imprägnierung und die Mittel zur Führung auf dem Schlitten (26) vertikal beweglich montiert sind;
**dadurch gekennzeichnet, dass** die Vorrichtung (38) zur Imprägnierung eine Düse (46) zur Abscheidung der Matrix (18) auf eine Verstärkungszone (16) umfasst, die weniger groß ist als die quergerichtete Breite der Verstärkung (16), wobei die Vorrichtung (38) zur Imprägnierung ein Schiffchen (48), das die Düse (46) an Bord nimmt, und ein Bauteil (50) zur quergerichteten Führung umfasst, das die Verschiebung der Düse (46) gemäß der in Bezug auf den Schlitten (26) quergerichteten Richtung gestattet.

2. Einrichtung (20) nach dem vorstehenden Anspruch, **dadurch gekennzeichnet, dass** die Vorrichtung (38) zur Imprägnierung und die Mittel zur Führung gemäß der vertikalen Richtung gemeinsam beweglich montiert sind.

3. Einrichtung (20) nach dem vorstehenden Anspruch, **dadurch gekennzeichnet, dass** die Vorrichtung (38) zur Imprägnierung und die Mittel zur Führung auf einer gleichen tragenden Struktur (32) montiert sind, die vertikal gleitend auf dem Schlitten (26) montiert ist.

4. Einrichtung (20) nach einem der vorstehenden Ansprüche, **dadurch gekennzeichnet, dass** das vertikale Gleiten der Vorrichtung (38) zur Imprägnierung und der Mittel zur Führung mittels einer motorisierten Betätigungsvorrichtung (44) realisiert werden.

5. Einrichtung (20) nach einem der vorstehenden Ansprüche, **dadurch gekennzeichnet, dass** sie eine Rolle (24) umfasst, die durch Wicklung der Verstärkung (16) realisiert wird, wobei die Rolle (24) drehbar um eine erste quergerichtete Drehachse montiert ist, um die Abwicklung der Verstärkung (16) gemäß einer Längsabwicklungsrichtung und die Passage der Verstärkung (16) durch die Mittel zur Führung und die Vorrichtung (38) zur Imprägnierung hindurch zu gestatten.

6. Einrichtung (20) nach dem vorstehenden Anspruch, in Kombination genommen mit den Ansprüchen 3 und 4, **dadurch gekennzeichnet, dass** die Verstärkungsrolle (24) drehbar auf der tragenden Struktur (32) montiert ist.

7. Einrichtung (20) nach einem der vorstehenden Ansprüche, **dadurch gekennzeichnet, dass** die Vorrichtung (38) zur Imprägnierung eine Vorrichtung (54) zur Verdichtung umfasst, die die Verstärkung (16) und die Matrix (18), nach der Abscheidung der Matrix (18) und bevor sie auf den Tisch (22) abgelegt wird, komprimiert.

## Claims

1. An apparatus (20) for manufacturing panels (10) comprising a core (12) sandwiched between two plies (14) of composite material, each ply (14) of composite material comprising a fabric reinforcement (16) impregnated with a matrix (18), the apparatus (20) comprising:
- a table (22) for receiving the panel (10), which extends in a transverse longitudinal plane;
- a carriage (26) mobile in the longitudinal direction, which comprises guide means through which the reinforcement (16) passes in order to gradually extend the reinforcement (16) flat on the table (22) as the carriage (26) moves;
- a device (38) for impregnating the reinforcement (16) with the matrix (18), which is supplied with the matrix (18) in liquid form and is carried by the carriage (26), the reinforcement (26) being gradually impregnated as it passes through the impregnation device (38) before being deposited on the table (22);
- the impregnation device (38) and the guide means are mounted so as to be vertically mobile on the carriage (26);
**characterized in that** the impregnation device (38) comprises a nozzle (46) for depositing the matrix (18) on an area of the reinforcement (16) that is less wide than the transverse width of the reinforcement (16), the impregnation device (38) comprising a shuttle (48) carrying the nozzle (46) and a transverse guide member (50) which allows the nozzle (46) to be moved in the transverse direction relative to the carriage (26).

2. The apparatus (20) according to the previous claim, **characterized in that** the impregnation device (38) and the guide means are mounted so as to be mobile together in the vertical direction.

3. The apparatus (20) according to the previous claim, **characterized in that** the impregnation device (38) and the guide means are mounted on the same support structure (32) which is mounted so as to slide vertically on the carriage (26).

4. The apparatus (20) according to any of the preceding claims, **characterized in that** the vertical sliding of the impregnation device (38) and the guide means is obtained by means of a motorized actuator (44).

5. The apparatus (20) according to any of the preceding claims, **characterized in that** it comprises a roll (24) formed by winding reinforcement (16), the roll (24) being mounted so as to rotate about a first transverse axis of rotation to allow the reinforcement (16) to be unwound in a longitudinal unwinding direction and the reinforcement (16) to pass through the guide means and the impregnation device (38).

6. The apparatus (20) according to the previous claim taken in combination with claims 3 and 4, **characterized in that** the reinforcement roll (24) is mounted to rotate on the support structure (32).

7. The apparatus (20) according to any of the preceding claims, **characterized in that** the impregnation device (38) comprises a compaction device (54) which compresses the reinforcement (16) and the matrix (18) after deposition of the matrix (18) and before its deposition on the table (22).
